Europäisches Patentamt

European Patent Office

Office européen des brevets

(11) Veröffentlichungsnummer: **0 156 125**
**B1**

(12) **EUROPÄISCHE PATENTSCHRIFT**

(45) Veröffentlichungstag der Patentschrift:
**20.04.88**

(21) Anmeldenummer: **85101192.4**

(22) Anmeldetag: **05.02.85**

(51) Int. Cl.⁴: **A 01 D 78/10**

(54) **Trommelschwader.**

(30) Priorität: **21.03.84 DE 3410312**

(43) Veröffentlichungstag der Anmeldung:
**02.10.85 Patentblatt 85/40**

(45) Bekanntmachung des Hinweises auf die Patenterteilung:
**20.04.88 Patentblatt 88/16**

(84) Benannte Vertragsstaaten:
**AT BE CH DE FR GB IT LI NL SE**

(56) Entgegenhaltungen:
**DE - A - 2 832 425**
**FR - A - 1 565 272**
**FR - A - 2 342 638**
**NL - A - 6 702 377**

(73) Patentinhaber: **Klöckner-Humboldt-Deutz AG
Zweigniederlassung Fahr, D-7702 Gottmadingen (DE)**

(72) Erfinder: **Wessel, Ulrich, Hilzingerstrasse 33,
D-7702 Gottmadingen (DE)**

ACTORUM AG

## Beschreibung

Die Erfindung bezieht sich auf eine Trommelschwadmaschine mit einem an einen Schlepper ankuppelbaren Tragbalken, an dem ein Querträger schräg zur Fahrtrichtung der Trommelschwadmaschine angeordnet ist, und mit einer geraden Vielzahl von Fördertrommeln, die um parallel zueinander verlaufende und einen Winkel zur Bodenoberfläche einnehmende Achsen unterhalb des Querträgers drehbar an ihm angelenkt sind, so dass sie – gesehen in Fahrtrichtung – versetzt zueinander liegen und sich ihre Arbeitsbereiche überlappen.

Trommelschwadmaschinen werden bei der Heuernte eingesetzt, wobei das getrocknete Heu zum Aufladen zu einem Schwad geformt werden soll. Durch die schräg zur Fahrtrichtung angeordneten, gleichsinnig angetriebenen Trommeln wird das getrocknete Heu über die gesamte Breite der Trommeln befördert und neben der – in Fahrtrichtung gesehen – letzten Trommel zu einem Schwad geformt. Ein derartiger Grossschwad kann dann anschliessend von einem Ladefahrzeug aufgenommen werden. Der Vorteil von Trommelschwadmaschinen gegenüber den herkömmlichen Heuerntemaschinen mit Rechrädern ist darin zu sehen, dass einmal das Futter aufgrund der elastischen Ausgestaltung der Trommeln, die z. B. aus Gummi bestehen können, schonend befördert wird und dass zum anderen aufgrund des Fehlens von metallischen Zinken keine abgebrochenen Zinken mehr in die Weiterverarbeitungsmaschinen und letztlich zum Vieh gelangen können.

Eine Heuerntemaschine mit einem Paar Rechräder, das mittels Rollen auf dem Boden fahrbar abgestützt ist, um lotrecht stehende Achsen angetrieben und an den Enden eines in einer Horizontalebene schwenkbaren Auslegers montiert ist, ist aus der CH-A-499 254 bekannt. Bei dieser Heuerntemaschine ist das erste Rechenrad in bezug auf die Fahrspur ortsfest, während das zweite Rechenrad in Fahrtrichtung gesehen mittels des Auslegers sowohl nach der einen als auch nach der anderen Seite des ersten Rechenrades versetzbar und auf jeder Seite in mindestens einer Stellung feststellbar ist. Sofern das zweite Rad nach der einen Seite ausgeschwenkt ist, arbeitet jedes Rechenrad unabhängig, d. h. es können sich bei niedriger Drehzahl zwei Schwaden bilden, oder bei hoher Drehzahl kann das Gut gewendet werden. Beim Ausschwenken des zweiten Rechenrades zur anderen Seite arbeiten beide Rechenräder zusammen, so dass das vom ersten Rechenrad gerechte Gut dem zweiten übergeben wird, wodurch ein entsprechend grösserer Schwad geformt wird. Das Umstellen des zweiten Rechenrades erfolgt also dadurch, dass der gesamte Querträger, an dem die beiden Rechenräder angeordnet sind, in einer horizontalen Ebene um seine Anlenkachse hinter dem Schlepper verschwenkt werden muss.

Abgesehen von der Verwendung von metallischen Zinken, mit den ihnen anhaftenden Nachteilen, sind bei dieser bekannten Heuerntemaschine noch die Rechenräder mit je einer Stützrolle auf dem Boden fahrbar, die mit einem Arm an einer Konsole schwenkbar gelagert sind, wobei das hintere Rechenrad zusätzlich mit einer Nachlaufrolle versehen sein muss, die mit einem Glied an der Konsole befestigt ist. Beim Verschwenken des Auslegers mit den beiden an ihm angeordneten Rechenrädern muss, damit in der neuen Arbeitsstellung die Stützrolle des hinteren Rechenrades wieder parallel zur Fahrlängsachse eingestellt werden kann, auch die Verriegelungsstellung des Stellsegments des hinteren Rechenrades am Ausleger entsprechend geändert werden.

Die Erfindung hat sich zur Aufgabe gestellt, eine Trommelschwadmaschine der eingangs genannten Art zu schaffen, mit der auf schonende Weise sowohl ein Grossschwad geformt werden kann als auch mehrere kleine parallel zueinander abgelegte Schwaden gebildet werden können und die mit wenigen einfachen Handgriffen auf diese beiden Arbeitsmöglichkeiten umstellbar ist.

Ausgehend von einer Trommelschwadmaschine der eingangs näher genannten Art wird zur Lösung dieser Aufgabe vorgeschlagen, dass die Fördertrommeln in Gruppen paarweise angeordnet sind und dass mindestens eine – gesehen quer zur Fahrtrichtung – innere Fördertrommel um die Achse der ihr benachbarten, äusseren Fördertrommel um 180° derart schwenkbar ist, dass ihre Achse den Winkel zum Boden beibehält.

Bei einer Trommelschwadmaschine, an der am Querträger vier Fördertrommeln nebeneinander angeordnet sind, die alle die gleiche Drehrichtung aufweisen, wird vorteilhafterweise, in Fahrtrichtung der Maschine gesehen, die zweite Fördertrommel um die erste Fördertrommel herum verschwenkt, so dass zwischen der ersten und der dritten Fördertrommel eine Lücke von der Breite der verschwenkten Fördertrommel entsteht.

Bei einem anderen Ausführungsbeispiel einer Trommelschwadmaschine mit vier Fördertrommeln ist es auch möglich, dass die – in Fahrtrichtung gesehen – dritte Fördertrommel um die vierte Fördertrommel verschwenkt wird, so dass zwischen der zweiten und der vierten Fördertrommel wiederum eine Lücke von der Breite der verschwenkten Fördertrommel entsteht.

Bei einer Trommelschwadmaschine mit grösserer Arbeitsbreite, die z. B. sechs Fördertrommeln aufweist, können bei einem anderen bevorzugten Ausführungsbeispiel die – in Fahrtrichtung gesehen – zweite Fördertrommel um die erste Fördertrommel und die fünfte Fördertrommel um die sechste Fördertrommel verschwenkt werden, so dass zwei Lücken von der Breite der verschwenkten Fördertrommeln entstehen.

Bei einer Trommelschwadmaschine mit vier Fördertrommeln sind vorteilhafterweise die – in Fahrtrichtung gesehen – vordersten beiden Fördertrommel niedriger als die beiden hinteren Fördertrommeln und an einem unterhalb und parallel zum Querträger angeordneten Hilfsträger drehbar angelenkt.

Hierbei sind die niedrigeren vorderen beiden Fördertrommeln im Bereich des geringeren Futteraufkommens wirksam, während die höheren beiden Fördertrommeln im Bereich des hohen Futteraufkommens, insbesondere bei Ausbildung eines Grossschwads, angeordnet sind. Sofern neben der – in Fahrtrichtung gesehen – letzten Fördertrommeln und im Abstand von ihr ein Schwadblech angeordnet ist, braucht dieses beim Umstellen auf zwei kleineren Schwaden nicht abgenommen und umgesetzt zu werden.

Der Hilfsträger ist vorzugsweise um die Achse der einen an ihm angelenkten Fördertrommel einen Winkel von 180° verschwenkbar. Die Arbeitsbreite der Trommelschwadmaschine wird dadurch insgesamt um eine Trommelbreite vergrössert.

Bei der erfindungsgemässen Trommelschwadmaschine sind vorzugsweise alle Fördertrommeln durch einen Keilriemenantrieb in Drehung versetzbar, wobei sie ihre Drehrichtung auch nach dem Verschwenken einer oder mehrerer Fördertrommeln beibehalten.

Besonders günstig ist es, wenn die Achsen der Fördertrommeln einen spitzen Winkel mit der Bodenoberfläche derart einschliessen, dass ihre unteren, in Fahrtrichtung gesehen vorderen Ränder den Boden berühren. Dadurch erfolgt ein schonendes Untergreifen des Futters, das zu einem Schwad geformt wird, ohne dass es mit Erde verunreinigt wird.

Zur besseren Ausbildung eines Grossschwads kann neben der in Fahrtrichtung gesehen letzten Fördertrommel ein Schwadblech angeordnet sein, dessen Abstand zum Umfang der letzten Fördertrommel einstellbar ist. Dieses Schwadblech behält seine Stellung auch nach Umstellung der Trommelschwadmaschine zu einer Schwadmaschine mit mehreren kleineren Schwaden bei.

Besonders vorteilhaft ist es, wenn unter mindestens jeder zweiten Fördertrommel ein zentrisch angeordnetes Laufrad vorgesehen ist, so dass auch nach dem Verschwenken einer Fördertrommel mit ihrem Laufrad der Abstand der Fördertrommel zur Bodenoberfläche gleich bleibt, ohne dass irgendwelche weiteren Einstellarbeiten oder Justierungen am Laufrad vorgenommen werden müssen.

Mit der Erfindung wird der Vorteil erzielt, dass mit wenigen Handgriffen, d.h. durch einmaliges Verschwenken eines Hilfsträgers um seine Drehachse um 180° die Trommelschwadmaschine zu einer Schwadmaschine mit mehreren kleineren parallel zueinander verlaufenden Schwaden verändert wird, wobei durch die Vergrösserung der Arbeitsbreite bei Verschwenken mindestens einer Fördertrommel eine grössere Flächenleistung erzielt wird.

Im folgenden wird die Erfindung anhand der Zeichnung näher erläutert, in der ein vorteilhaftes Ausführungsbeispiel einer Trommelschwadmaschine dargestellt ist.

Es zeigen:

Fig. 1 eine rückwärtige Ansicht einer im Einsatz befindlichen Trommelschwadmaschine mit vier Fördertrommeln, und

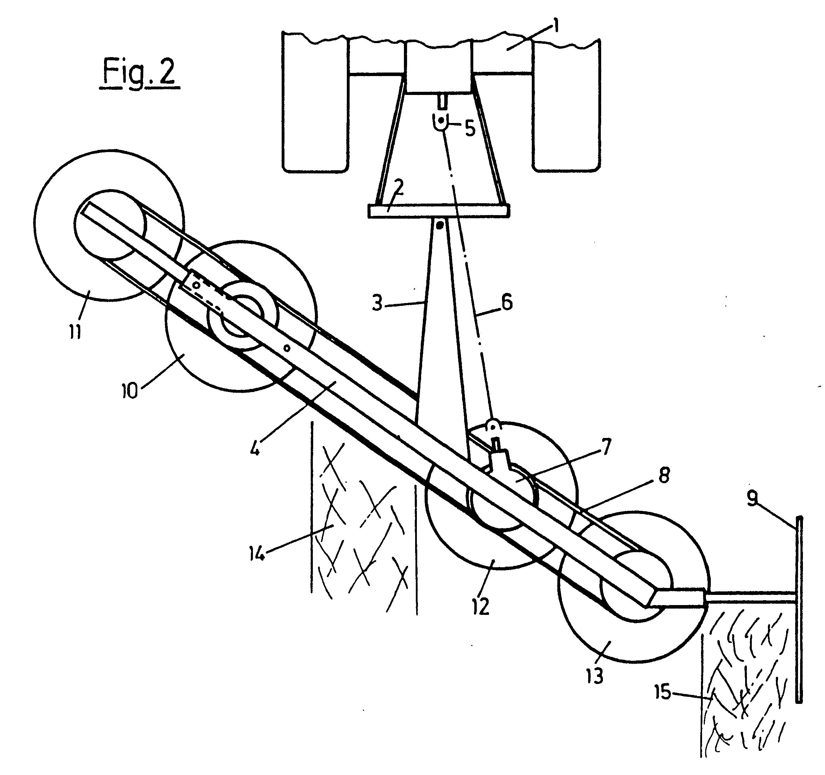

Fig. 2 eine Draufsicht auf diese Maschine.

Bei dem in den beiden Figuren dargestellten Ausführungsbeispiel handelt es sich um eine Trommelschwadmaschine mit vier Fördertrommeln, die von einem nicht näher dargestellten Schlepper 1 gezogen wird. Die Trommelschwadmaschine ist über eine schematisch bezeichnete Befestigungsvorrichtung 2 mit dem Schlepper verbunden, an der sich ein in Fahrtrichtung der Maschine erstreckender Tragbalken 3 befindet. Am Tragbalken ist ein unter einem Winkel zur Fahrtrichtung der Maschine angeordneter Querträger 4 in einer waagrechten Ebene angeordnet, unter dem im gewählten Ausführungsbeispiel vier Fördertrommeln 10, 11, 12, 13 drehbar angelenkt sind, die sich bis zum Boden erstrecken.

Von der Zapfwelle 5 des Schleppers besteht eine Drehverbindung zu einem am Querträger 4 angeordneten Winkelgetriebe 7, durch welches ein Keilriemengetriebe 8 angetrieben wird, welches sämtliche Fördertrommeln im gleichen Drehsinn antreibt. Durch den unter einem Winkel zur Fahrtrichtung der Maschine angeordneten Querträger 4 und die unmittelbar nebeneinander angeordneten Fördertrommeln 10 bis 13 überlappen sich deren Arbeitsbereiche, so dass das zu einem Schwad zu formende Heu von der in Fahrtrichtung gesehen vordersten Fördertrommel über alle benachbarten Fördertrommeln bis zur hintersten Fördertrommel weiterbefördert wird, neben der es zu einem Schwad 15 geformt wird. Zur besseren Schwadformung kann neben der letzten Fördertrommel 13 ein Schwadformungsblech 9 vorgesehen sein, das in einem veränderbaren Abstand zum Umfang der letzten Fördertrommel angeordnet ist.

Sollen statt eines einzigen Grossschwads parallel zueinander gebildete kleinere Schwaden 14, 15 gebildet werden, so kann, wie es in den Figuren dargestellt ist, die in Fahrtrichtung der Maschine gesehen zweite Fördertrommel 11 um die erste Fördertrommel 10 herum um einen Winkel von 180° bezüglich der Achse 17 der benachbarten Fördertrommel 10 derart verschwenkt werden, dass ihre Achse den Winkel zum Boden beibehält. Diese Stellung bei einer Trommelschwadmaschine mit vier Fördertrommeln ist in der Zeichnung dargestellt. Dadurch entsteht also zwischen der ursprünglich ersten Fördertrommel 10 und der dritten Fördertrommel 12 eine Lücke von der Breite der verschwenkten Fördertrommel 11, so dass neben dem ursprünglichen Schwad 15 ein parallel dazu liegender zweiter Schwad 14 geformt wird.

Um nun die Fördertrommel 11 entlang eines Halbkreises um die Fördertrommel 10 herum verschwenken zu können, sind diese beiden Trommeln an einem parallel und unterhalb zum Querträger 4 angeordneten Hilfsträger 16 gelagert, dessen Drehpunkt mit der Achse 17 der Fördertrommel 10 zusammenfällt. Die beiden Fördertrommeln 10 und 11 sind dabei niedriger als die beiden Fördertrommeln 12, 13 ausgestaltet, so dass bei Ausbildung eines einzigen Grossschwads 15, d.h. im nicht verschwenkten Zustand der Fördertrommel 11 die beiden Fördertrommeln 10, 11 im Bereich des geringeren Futteraufkommens ar-

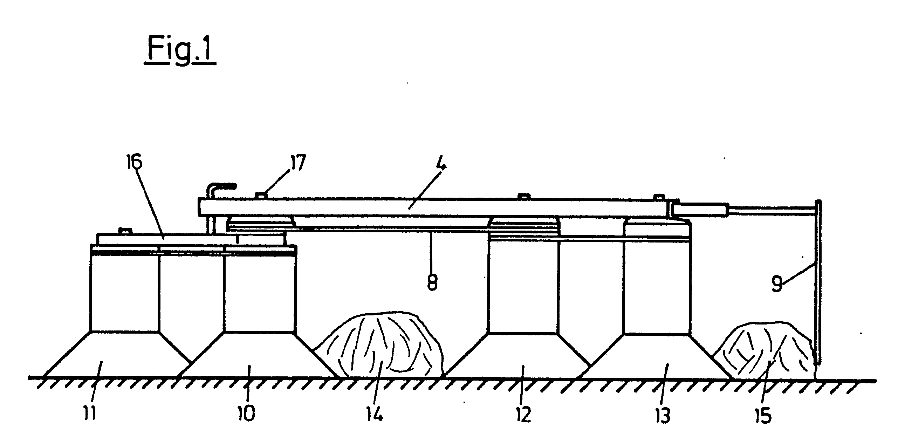

beiten, hingegen die beiden Fördertrommeln 12, 13, die wie insbesondere Fig. 1 erkennen lässt, höher sind, im Bereich des höheren Futteraufkommens arbeiten.

Anstelle einer Trommelschwadmaschine mit vier nebeneinander angeordneten Fördertrommeln kann auch eine solche mit z. B. sechs Fördertrommeln verwendet werden. In diesem Fall ist es dann vorteilhaft zur Erzielung von drei parallel zueinander liegenden kleineren Schwaden, sowohl die zweite Trommel um die erste Trommel herum als auch die fünfte Trommel um die sechste Trommel herum zu verschwenken, so dass eine noch grössere Arbeitsbreite erzielt wird.

Unter jeder Fördertrommel, zumindest aber unter jeder zweiten Fördertrommel, ist ein zentrisch angeordnetes Laufrad vorgesehen (nicht dargestellt), so dass auch nach dem Verschwenken einer Fördertrommel um 180° bezüglich der Achse der ihr benachbarten Fördertrommel das Laufrad wieder parallel zur Fahrtrichtung der Maschine zu liegen kommt und der einmal eingestellte Abstand zwischen dem unteren Rand der Fördertrommel und dem oberen beibehalten wird.

**Patentansprüche**

1. Trommelschwadmaschine mit einem an einen Schlepper (1) ankuppelbaren Tragbalken (3), an dem ein Querträger (4) schräg zur Fahrtrichtung der Trommelschwadmaschine angeordnet ist und mit einer geraden Vielzahl von Fördertrommeln (10, 11, 12, 13), die um parallel zueinander verlaufende und einen Winkel zur Bodenoberfläche einnehmende Achsen unterhalb des Querträgers (4) drehbar an ihm angelenkt sind, so dass sie – gesehen in Fahrtrichtung – versetzt zueinander liegen und sich ihre Arbeitsbereiche überlappen, dadurch gekennzeichnet, dass die Fördertrommeln (10, 11, 12, 13) in Gruppen paarweise angeordnet sind und dass mindestens eine – gesehen quer zur Fahrtrichtung – innere Fördertrommel (11) um die Achse (17) der ihr benachbarten, äusseren Fördertrommel (10) um 180° derart schwenkbar ist, dass ihre Achse den Winkel zur Bodenoberfläche beibehält.

2. Trommelschwadmaschine nach Anspruch 1, dadurch gekennzeichnet, dass am Querträger (4) vier Fördertrommeln (10 bis 13) angeordnet sind, die die gleiche Drehrichtung aufweisen und dass, in Fahrtrichtung gesehen, die zweite Fördertrommel (11) um die erste Trommel (10) verschwenkbar ist, so dass zwischen der ersten und der dritten Fördertrommel (12) eine Lücke von der Breite der verschwenkten Fördertrommel (11) entsteht.

3. Trommelschwadmaschine nach Anspruch 1, dadurch gekennzeichnet, dass am Querträger (4) vier Fördertrommeln (10 bis 13) angeordnet sind, die die gleiche Drehrichtung aufweisen und dass, in Fahrtrichtung gesehen, die dritte Fördertrommel (12) um die vierte Fördertrommel (13) verschwenkbar ist, so dass zwischen der zweiten und der vierten Fördertrommel (13) eine Lücke von der Breite der verschwenkten Fördertrommel (12) entsteht.

4. Trommelschwadmaschine nach Anspruch 1, dadurch gekennzeichnet, dass sie sechs Fördertrommeln aufweist und dass, in Fahrtrichtung gesehen, die zweite Fördertrommel um die erste Fördertrommel und die fünfte Fördertrommel um die sechste Fördertrommel verschwenkbar sind, so dass zwei Lücken von der Breite der verschwenkten Fördertrommeln entstehen.

5. Trommelschwadmaschine mit vier Fördertrommeln nach den Ansprüchen 1 bis 3, dadurch gekennzeichnet, dass, in Fahrtrichtung gesehen, die vordersten beiden Fördertrommeln 10, 11 niedriger sind als die hinteren beiden Fördertrommeln (12, 13) und dass sie an einem unterhalb und parallel zum Querträger (4) angeordneten Hilfsträger (16) drehbar angeordnet sind.

6. Trommelschwadmaschine nach Anspruch 5, dadurch gekennzeichnet, dass der Hilfsträger (16) um die Achse (17) um einen Winkel von 180° in einer horizontalen Ebene verschwenkbar ist.

7. Trommelschwadmaschine nach einem der vorhergehenden Ansprüche 1 bis 6, dadurch gekennzeichnet, dass alle Fördertrommeln (10 bis 13) durch einen Keilriemenantrieb (8) in Drehungen versetzbar sind und ihre Drehrichtung nach dem Verschwenken einer oder mehrerer der Fördertrommeln beibehalten.

8. Trommelschwadmaschine nach einem der vorhergehenden Ansprüche 1 bis 7, dadurch gekennzeichnet, dass die Achsen der Fördertrommeln (10 bis 13) einen spitzen Winkel mit der Bodenoberfläche derart einschliessen, dass ihre unteren, in Fahrtrichtung gesehen vorderen Ränder die Bodenoberfläche berühren.

9. Trommelschwadmaschine nach einem der vorhergehenden Ansprüche 1 bis 8, dadurch gekennzeichnet, dass neben der in Fahrtrichtung gesehen letzten Fördertrommel (13) ein senkrechtes, sich parallel zur Fahrtrichtung erstreckendes Schwadblech (9) angeordnet ist, dessen Abstand zum Umfang der letzten Fördertrommel (13) einstellbar ist.

10. Trommelschwadmaschine nach einem der vorhergehenden Ansprüche 1 bis 9, dadurch gekennzeichnet, dass unter mindestens jeder zweiten Fördertrommel ein zentrisch angeordnetes Laufrad vorgesehen ist, so dass auch nach dem Verschwenken einer Fördertrommel mit ihrem Laufrad der Abstand der Fördertrommel zur Bodenoberfläche gleich bleibt.

**Claims**

1. Drum-type swathing machine having a support beam (3), which is connectable to a tractor (1) and on which a crosspiece member (4) is disposed inclinedly with respect to the direction of travel of the drum-type swathing machine, and having an even number of conveyor drums (10, 11, 12, 13), which are pivotally mounted on the crosspiece member (4) so as to be rotatable about axles, which extend parallel to one another and assume an angle relative to the ground surface, beneath the crosspiece member, so that the drums are disposed offset from one another – when viewed with respect to the direction of travel – and their working areas overlap one another, characterized in that the conveyor drums (10, 11, 12, 13) are disposed in groups in pairs, and in that at least one inner conveyor drum (11) – when viewed at right angles to the direction of travel – is pivotable through 180° about the axle (17) of the outer conveyor drum (10) adjacent thereto in such a manner that its axle maintains the angle relative to the ground surface.

2. Drum-type swathing machine according to claim 1, characterized in that four conveyor drums (10 to 13) are disposed on the crosspiece member (4) and have the same direction of rotation, and in that, when viewed with respect to the direction of travel, the second conveyor drum (11) is pivotable about the first drum (10), so that a gap, corresponding to the width of the pivoted conveyor drum (11), is produced between the first and third conveyor drum (12).

3. Drum-type swathing machine according to claim 1, characterized in that four conveyor drums (10 to 13) are disposed on the crosspiece member (4) and have the same direction of rotation, and in that, when viewed with respect to the direction of travel, the third conveyor drum (12) is pivotable about the fourth conveyor drum (13), so that a gap, corresponding to the width of the pivoted conveyor drum (12), is produced between the second and fourth conveyor drum (13).

4. Drum-type swathing machine according to claim 1, characterized in that it has six conveyor drums, and in that, when viewed with respect to the direction of travel, the second conveyor drum is pivotable about the first conveyor drum and the fifth conveyor drum is pivotable about the sixth conveyor drum, so that two gaps, corresponding to the width of the pivoted conveyor drums, are produced.

5. Drum-type swathing machine having four conveyor drums according to claim 1 to 3, characterized in that, when viewed with respect to the direction of travel, the two foremost conveyor drums (10, 11) are lower than the two rear conveyor drums (12, 13), and in that they are rotatably disposed on an auxiliary support (16) disposed beneath and parallel to the crosspiece member (4).

6. Drum-type swathing machine according to claim 5, characterized in that the auxiliary support (16) is pivotable about the axle (17) through an angle of 180° in a horizontal plane.

7. Drum-type swathing machine according to one of the preceding claims 1 to 6, characterized in that all of the conveyor drums (10 to 13) are capable of being set in rotation by a V-belt drive (8) and maintain their direction of rotation after the pivotal movement of one or more of the conveyor drums.

8. Drum-type swathing machine according to one of the preceding claims 1 to 7, characterized in that the axles of the conveyor drums (10 to 13) subtend an acute angle with the ground surface in such a manner that their lower front edges, when viewed with respect to the direction of travel, are in contact with the ground surface.

9. Drum-type swathing machine according to one of the preceding claims 1 to 8, characterized in that a vertical swath plate (9), which extends parallel to the direction of travel, is disposed adjacent to the last conveyor drum (13), when viewed with respect to the direction of travel, the spacing between the swath plate and periphery of the last conveyor drum (13) being adjustable.

10. Drum-type swathing machine according to one of the preceding claims 1 to 9, characterized in that a centrally disposed running wheel is provided below at least every second conveyor drum, so that the spacing between the conveyor drum and the ground surface remains the same, even after the pivotal movement of a conveyor drum with its running wheel.

**Revendications**

1. Andaineuse à tambours avec une barre-support (3) attelable à un tracteur (1) à laquelle est fixé un support transversal (4) en biais par rapport au sens de la marche de l'andaineuse à tambours et avec un nombre entier de tambours transporteurs (10, 11, 12, 13) qui sont articulés sous le support transversal (4) et qui sont susceptibles de tourner autour d'axes parallèles entre eux qui forment un angle par rapport à la surface du sol, de telle sorte que vus dans le sens de la marche ils sont décalés les uns par rapport aux autres et que leurs zones de travail se chevauchent, caractérisée en ce que les tambours transporteurs (10, 11, 12, 13) sont groupés par paires et en ce qu'au moins un tambour transporteur (11) interne, vu dans le sens de la marche, peut pivoter de 180° autour de l'axe (17) du tambour transporteur (10) externe qui lui est voisin, de telle sorte que l'angle de son axe par rapport à la surface du sol soit conservé.

2. Andaineuse à tambours selon la revendication (1), caractérisée en ce que quatre tambours transporteurs (10 à 13) sont fixés au support transversal (4), qui présentent le même sens de rotation, et en ce que le deuxième tambour transporteur (11) vu dans le sens de la marche peut pivoter autour du premier tambour (10), de telle sorte qu'entre le premier et le troisième tambour transporteur (12) apparaisse un vide de la largeur du tambour transporteur (11) qui a pivoté.

3. Andaineuse à tambours selon la revendication 1, caractérisée en ce que quatre tambours transporteurs (10 à 13) sont fixés sur le support transversal (4), qui présentent le même sens de rotation, et en ce que le troisième tambour transporteur (12) par rapport au sens de la marche peut pivoter autour du quatrième tambour transporteur (13), de telle sorte qu'entre le deuxième et le quatrième tambour transporteur (13) apparaisse un vide de la largeur du tambour transporteur (12) qui a pivoté.

4. Andaineuse à tambours selon la revendication 1, caractérisée en ce qu'elle comporte six tambours transporteurs et en ce que le deuxième tambour transporteur par rapport au sens de la marche peut pivoter autour du premier tambour transporteur et en ce que le cinquième tambour transporteur peut pivoter autour du sixième tambour transporteur de telle sorte qu'apparaissent deux vides de la largeur des tambours transporteurs qui ont pivoté.

5. Andaineuse à tambours avec quatre tambours transporteurs selon les revendications 1 à 3, caractérisée en ce que les deux tambours transporteurs 10, 11 avant vus dans le sens de la marche sont plus bas que les deux tambours transporteurs (12, 13) arrière et en ce qu'ils sont fixés de façon à pouvoir tourner à un support auxiliaire (16) disposé parallèlement et au-dessous du support transversal (4).

6. Andaineuse à tambours selon la revendication 5, caractérisée en ce que le support auxiliaire (16) peut pivoter autour de l'axe (7) d'un angle de 180° dans un plan horizontal.

7. Andaineuse à tambours selon l'une des revendications 1 à 6 précédentes, caractérisée en ce que tous les tambours transporteurs (10 à 13) peuvent être entraînés en rotation au moyen d'un entraînement à courroie trapézoïdale (8) et en ce qu'ils conservent leur sens de rotation après pivotement d'un ou de plusieurs des tambours transporteurs.

8. Andaineuse à tambours selon l'une des revendications 1 à 7 précédentes, caractérisée en ce que les axes des tambours transporteurs (10 à 13) forment un angle aigu avec la surface du sol, de telle sorte que leurs bords inférieurs avant vus dans le sens de la marche viennent en contact avec la surface du sol.

9. Andaineuse à tambours selon l'une des revendications 1 à 8 précédentes, caractérisée en ce qu'une plaque à andain (9) verticale et s'étendant parallèlement au sens de la marche est disposée à côté du dernier tambour transporteur (13) par rapport au sens de la marche et dont la distance à la périphérie du dernier tambour transporteur (13) est réglable.

10. Andaineuse à tambours selon l'une des revendications 1 à 9 précédentes, caractérisée en ce que, sous au moins un tambour transporteur sur deux, une roue mobile disposée de façon centrée, est prévue de telle sorte que même après pivotement d'un tambour transporteur avec sa roue mobile la distance du tambour transporteur à la surface du sol reste identique.

Fig.1

Fig.1

0156125

Fig. 2